# FASCICULE DE BREVET EUROPEEN

(11) **EP 2 360 398 B1**
(45) Date de publication et mention de la délivrance du brevet: **05.06.2013**
(21) Numéro de dépôt: 10001434.9
(22) Date de dépôt: 11.02.2010
(51) Int. Cl.: F16H 63/36, F16H 3/00

(54) **Boite de vitesse a double embrayage**
Doppelkupplungsgetriebe
Double-clutch gearbox

(43) Date de publication de la demande: 24.08.2011
(73) Titulaire: VALEO Sicherheitssysteme GmbH, 85253 Erdweg (DE)
(72) Inventeur: Winter, M. Andreas, 94042 Creteil (FR); Linder, M. Anton, 94042 Creteil (FR)
(74) Mandataire: Jacquot, Ludovic R. G.

(56) Documents cités:
- EP-A2- 1 965 103
- DE-A1-102004 036 498
- DE-A1-102008 013 752

## Description

L'invention concerne les boites de vitesses automatiques ou motorisées, du type à double-embrayage.

Dans de telles boites de vitesses, au moins un arbre primaire entraîne deux arbres secondaires par l'intermédiaires de rapports de vitesses, selon une séquence selon laquelle un seul des deux rapports engagés est embrayé avec l'arbre primaire alors que l'autre rapport, n'est pas embrayé mais est déjà engagé. Ainsi, lorsque le rapport en cours de transmission est débrayé, le rapport suivant, déjà engagé, n'a qu'à être embrayé, sans perte de temps ni de puissance au passage entre les deux rapports.

A cet effet chacun des dits au moins deux arbres secondaires est muni d'un embrayage respectif qui lui est dédié et qui provoque l'entraînement de cet arbre secondaire par le rapport qui y est engagé lorsque cet embrayage est actionné.

Ces embrayages multiples associés respectivement à chacun de ces arbres secondaires sont en pratique réalisés sous la forme d'un organe englobant ces deux embrayages et appelé à cet effet double-embrayage.

Sur un même axe secondaire sont montés plusieurs rapports susceptibles d'être engagés. Typiquement, un des arbres secondaires porte les rapports pairs et l'autre arbre secondaire porte les rapports impairs.

Le document DE 10 2008 013 752 A1 divulgue une telle boîte de vitesses.

Il est nécessaire de veiller à ce que deux rapports différents ne puissent être engagés simultanément sur un même arbre secondaire, ce qui aurait alors pour effet de bloquer la boite de vitesse au moment au l'embrayage dédié à cet arbre serait actionné.

A cet effet, on veille par la programmation de la cinématique de la boite de vitesse à ce que ce cas ne puisse se produire. L'invention se propose d'améliorer encore la fiabilité d'une telle boite de vitesse à double-embrayage par rapport aux systèmes existants.

On propose pour cela selon l'invention une boite de vitesse selon la revendication 1.

D'autres caractéristiques, buts et avantages de l'invention apparaîtront à la lecture de la description détaillée qui va suivre, faite en référence aux figures annexées sur lesquelles :
- la figure 1 représente une boite de vitesse à double embrayage
- les figures 2 à 5 illustrent une cinématique d'engagement de rapport sur un levier d'engagement supérieur d'un couple de leviers associé à un doigt de commutation.
- les figures 6 à 8 illustrent une cinématique d'engagement de rapport sur un levier d'engagement Inférieur d'un couple de leviers associé à un doigt de commutation.

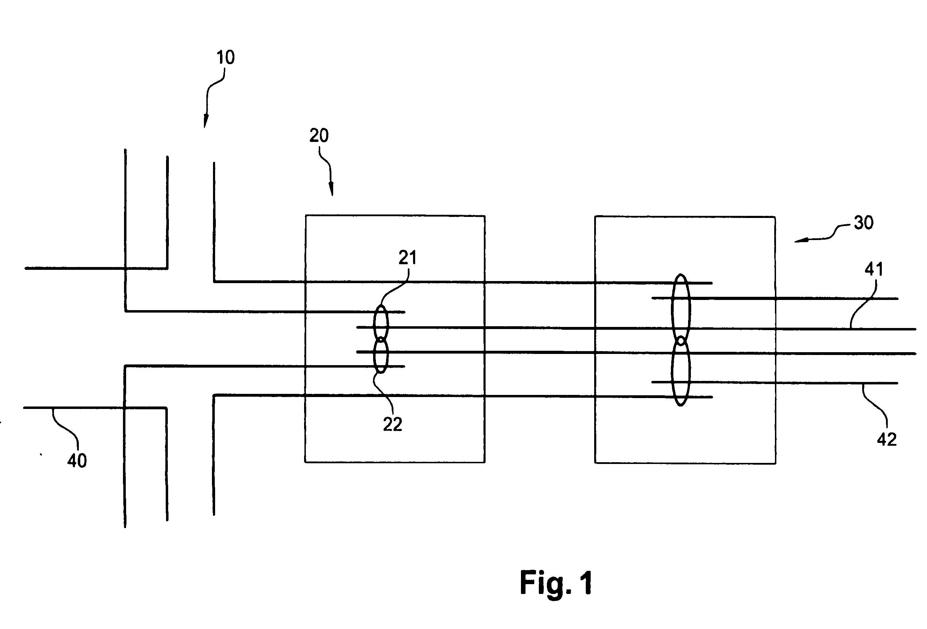

Sur la figure 1, on a représenté une boite de vitesse comprenant un double-embrayage 10, une demi boite de vitesse à rapports pairs 20, et une demi-boite de vitesse à rapports impairs 30.

Le double-embrayage 10 inclut deux embrayages dont l'un est associé à la demi-boite 20 et à un arbre secondaire 41, et l'autre est associe à la demi-boite 30 et à un arbre secondaire 42.

Selon que le double embrayage 20 est actlonné vers la gauche ou vers la droite, alors il il solidarise la sortie de moteur, située à gauche de la figure, avec la deml-boite à rapports pairs 20 ou avec la demi-boite à rapports Impairs 30.

Ainsi, alors qu'un rapport pair est engagé et embrayé, un rapport impair peut être engagé en préparation pour n'avoir plus qu'à être embrayé lorsque ce rapport devient nécessaire.

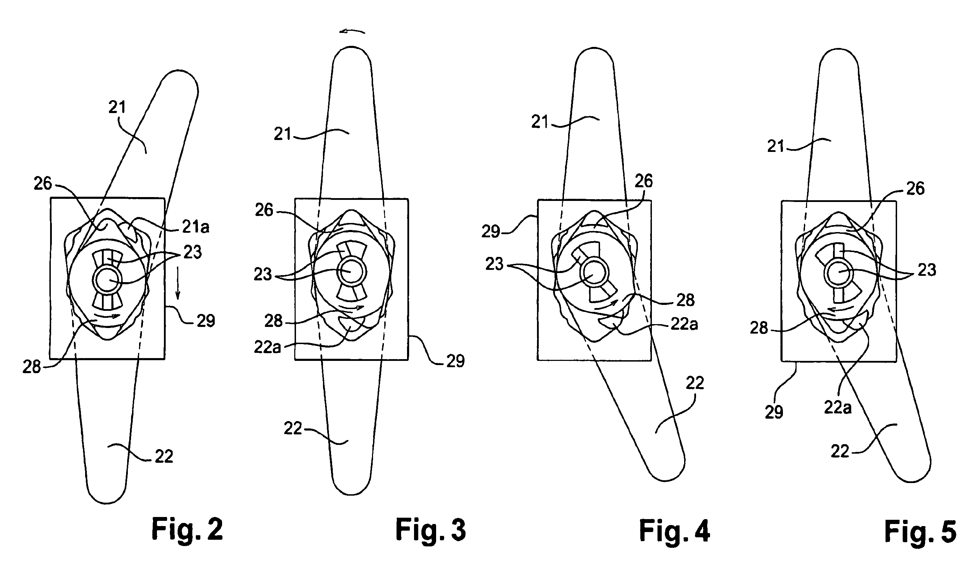

Une telle étape d'engagement de rapport est illustrée sur les figures 2 à 5.

Sur la figure 1, les deux arbres secondaires sont représentés sous les références 41 et 42. Ils sont respectivement associés à l'arbre primaire par l'intermédiaire du double embrayage 10, et par l'intermédiaire respectivement de la demi-boite 30 et la demi-boite 20.

Au sein de chaque demi-boite se trouve un couple de leviers d'actionnement 21, 22 et 31, 32 dont chacun des leviers 21, 22, 31, 32 est capable d'engager deux rapports différents selon qu'il est déplacé vers la droite ou vers la gauche.

On décrira maintenant le comportement d'un couple de leviers 21, 22 de la demi-boite 20 en rapport au figures 2 à 5.

Les rapports de la demi-botte 20 sont engagés ou désengagés par les deux leviers d'actionnement 21, 22. La position médiane de chaque levier d'actionnement est la position neutre dans laquelle aucun rapport n'est engagé par ce levier.

Dans cette position, un anneau de synchronisation, non représente, n'est pas engagé.

Du fait que le levier considéré, par exemple le levier 21 engage un rapport donné vers la gauche et un autre rapport vers la droite, le passage par la position neutre garantit que le levier ne peut engager qu'un seul rapport.

Si maintenant le levier 22, initialement en position neutre, est déplacé de manière à engager un rapport, il existe un risque que deux rapports soient engagés sur le même arbre de secondaire 41.

Dans le présent mode de réalisation, les deux leviers 21 et 22 sont actionnés par un même doigt d'actionnement 23, ici de type rotatif et portant deux ailettes de part et d'autre de ce dernier Le doigt d'actionnement est entraîné en rotation par un moteur électrique non représenté. Ce doigt d'actionnement pivote et vient en butée par ses aliettes dans un logement central de chaque levier d'actionnement et pivote et vient en butée également, là encore par ses ailettes, dans un logement central respectif 25, 27 de deux cames 26, 28.

Chacune des cames 26, 28 présente une excroissance dirigée à l'opposé l'une de l'autre par rapport et en direction respectivement du levier d'actionnement 21, 22,

En outre, les cames 26, 28 sont circonscrites à l'intérieur d'une navette 29 dont deux bordure internes 29a, 29b forment glissière pour l'excroissance respective de la came 26, 28.

Le doigt d'actionnement 23 est également entraîné en coulissement dans la direction de son axe de rotation, de sorte qu'il coopère ou bien avec la came 26, ou bien avec la came 28.

Supposons maintenant que, partant de la situation de la figure 2 où un rapport est engagé par le levier supérieur 21, le doigt d'actionnement 23 entraîne le levier inférieur en engagement d'un rapport. Le doigt d'actionnement 23 est pour cela placé axialement de manière à coopérer avec le levier d'actionnement 22 ainsi qu'avec la came 28 pointant dans la direction du levier d'actionnement 22.

Dans un premier temps, le doigt d'actionnement 23 vient entraîner la came 28 en rotation vers la droite, laquelle came vient alors glisser sur la glissière interne de la navette 29. La glissière de la navette 29 présente à cet endroit une pente dirigée vers la came orientée de telle sorte que le glissement de la came sur cette pente provoque le déplacement de la navette en rapprochement du levier 22, i.e. vers le bas sur la figure 3.

La glissière interne opposée de la navette 29, orientée vers la came 26, se trouve alors rapprochée de l'axe de rotation du levier 21. Le levier 21 présente quant à lui une excroissance 21a présente à l'intérieur du contour interne de la navette 29, sensiblement à même hauteur que l'excroissance de la came 26, et le contour interne de la navette 29 présente à cet endroit deux pentes venant se rejoindre en éloignement de l'axe de rotation du levier 21 de sorte que le déplacement de la navette 29 vers le bas occasionne un glissement de cette excroissance 21 a jusqu'à venir se positionner en position centrée entre ces deux pentes, c'est-à-dire dans une position ou le levier 21 se trouve en position neutre.

Ainsi, par l'actionnement du levier inférieur 22 et de la came associée 28, le levier supérieur 21 se voit entraîné jusqu'à sa position neutre et sécurisé dans cette position neutre.

Dans le présent mode de réalisation, la navette est entraînée vers le bas et le levier supérieur rappelé en position neutre avant que le levier inférieur ne soit entrainé, et ce grâce à l'action de la came 28 dont la rotation précède la rotation du levier Inférieur.

La rotation du levier inférieur est initiée par l'existence d'un butée, non représentée, contre laquelle vient se positionner le doigt d'actionnement.

Afin que la came 29 pivote avant le levier 22, la butée du levier 22 engagée par le doigt d'actionnement est disposée de manière décalée en rotation par rapport à la butée de la came 22 également engagée par le doigt d'actionnement.

De ce fait, aucun recouvrement dans l'engagement des rapports ne peut se produire.

Ainsi, lors de la rotation du levier inférieur 22, son excroissance 22 a vient alors en glissement contre une des pentes du contour intérieur de la navette 29, sécurisant encore le positionnement de la navette dans sa position extrême inférieure.

Tel que représenté à la figure 5, le doigt d'actionnement peut alors être rappelé dans sa position de départ, entraînant avec lui la came 28. Du fait que, de manière connue en soi, le levier d'actionnement 22 reste en place dans sa position d'engagement de rapport, le levier 22 maintient alors par lui-même la navette 29 en position basse.

Du fait que le contour interne de la navette 29 est symétrique par rapport à la position neutre des leviers, le rappel d'un levier en position neutre est produit quelle que soit la position de départ, gauche ou droite, du levier rappelé.

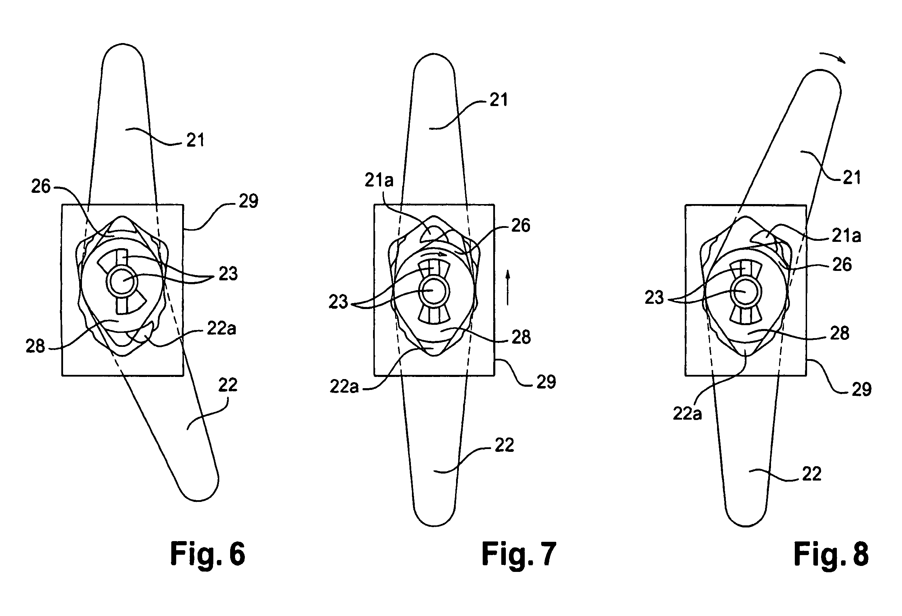

Tel qu'illustré sur les figure 6 à 8, une cinématique Identique se produit lorsque le levier 21 est à nouveau entraîné en rotation alors que le levier 22 engage un rapport.

Ainsi, la came 26 provoque le coulissement de la navette 29 et de cette façon un rappel du levier 22 est position neutre par l'intermédiaire de l'excroissance 22a du levier 22.

Le levier 21 est ensuite entrainé en rotation par le doigt d'actionnement 23 Jusqu'à venir à son tour maintenir par son excroissance 21a la navette 29 dans la position haute où elle maintient le levier 22 en position neutre.

La navette 29, ici décrite coulissante en translation, peut être également réalisée sous la forme d'un élément basculant en rotation, coopérant par ses extrémités avec les éléments d'actionnement de manière à rappeler l'un des éléments en position neutre avant de déplacer l'autre. De même, les éléments d'actionnement, ici décrits sous la forme de leviers, peuvent être réalisés sous la forme d'éléments coulissants.

Ainsi un dispositif mécanique particulièrement fiable permet d'éviter que deux rapports soient engagés simultanément sur un même arbre.

Ce mécanisme permet en outre de produire le désengagement d'un rapport par le même actionneur que celui qui produit l'engagement de l'autre rapport. De plus, la procédure d'engagement de rapport est rendue plus courte par un tel dispositif.

De plus, un dispositif électronique qui active le désengagement d'un rapport avant qu'un autre rapport ne soit engagé n'est plus nécessaire.

Grace à l'inventlon, la pré-sélection d'un rapport à venir est plus rapide du fait qu'elle évite une étape de commande préliminaire désengagement du rapport encore engagé sur le même arbre.

Par le fait que le désengagement du rapport précédent est effectué par un dispositif mécanique, il n'est pas nécessaire que les éléments d'actionnement, dans l'exemple décrit des leviers d'actlonnement, ou encore des fourchettes associées à ces éléments d'actionnement, soient prévus mobiles en rotation ou en translation.

## Revendications

1. Boite de vitesse à arbres secondaires multiples (41,42) et embrayages multiples (10) associés respectivement à chacun de ces arbres secondaires multiples, chaque arbre secondaire portant plusieurs rapports de transmission, la boite de vitesse comportant également un ensemble d'actionnement en engagement de plusieurs rapports d'un arbre secondaire, **caractérisé en ce que** l'ensemble d'actionnement présente deux éléments d'actionnement (21,22) dont chacun engage et désengage au moins un rapport de transmission d'un même arbre secondaire, l'ensemble d'actionnement présentant en outre un organe mécanique de liaison (29) entre les deux éléments d'actionnement qui sécurise un élément d'actionnement en position de désengagement de rapport lorsque l'autre des éléments d'actionnement est entraîné en engagement de rapport, **caracterisée en ce que** l'organe mécanique de liaison présente un contour Interne coopérant avec une excroissance respective (21a, 22a) de chacun des éléments d'actionnement (21, 22) de telle sorte qu'un déplacement en coulissement de l'organe mécanique de liaison produit un rappel d'un élément d'actionnement en position neutre lors du coulissement de l'organe mécanique de liaison l'ensemble d'entrainement comprenant au moins une came (26, 28) entrainée lors d'un entraînement en engagement de rapport d'un élement d'actionnement, et initiant un déplacement de l'organe mécanique de liaison par coulissement de la came contre l'organe mécanique de liaison.

2. Boite de vitesse selon la revendication précédente, **caractérisée en ce que** l'organe mécanique de liaison (29) est un organe coulissant.

3. Boite de vitesse selon la revendication 1 ou 2, **caractérisée en ce qu'**il comporte une came respective associée à chaque élément d'actionnement, et **en ce que** l'ensemble d'entrainement est configuré de telle façon que la came (26, 28) est entrainée avant l'élément d'actionnement lorsque ce dernier est déplacé en engagement d'un rapport.

4. Boite de vitesse selon la revendication 1, 2 ou 3, **caractérisée en ce que** la came (26, 28) présente une excroissance dirigée en éloignement d'un axe de rotation de l'élément d'actionnement et l'organe de liaison mécanique présente un contour formant glissière pour l'excroissance de la came de sorte que cette glissière est entrainée en éloignement de l'axe de rotation de l'élément d'actionnement lors d'une rotation de la came.

5. Boite de vitesse l'une quelconque des revendications précédentes, **caractérisée en ce que** les deux éléments d'actionnement (21, 22) sont des éléments rotatifs et présentent un même axe de rotation.

6. Boite de vitesse l'une quelconque des revendications précédentes, **caractérisée en ce que** les deux éléments d'actionnement sont actionnés par un même doigt d'actionnement (23), le doigt d'actionnement étant entraîné entre deux positions où il coopère respectivement avec l'un ou avec l'autre des deux éléments d'actionnement.

7. Boite de vitesse l'une quelconque des revendications précédentes, **caractérisée en ce que** les deux éléments d'actionnement (21, 22) consistent en des leviers rotatifs de directions sensiblement opposées et l'organe de liaison mécanique est un organe coulissant (29) en déplacement les directions opposées de l'un et de l'autre des deux éléments d'actionnement.

8. Boite de vitesse selon l'une quelconque des revendications précédentes, **caractérisée en ce que** les deux éléments d'actionnement (21, 22) sont entraînés par un même doigt d'actionnement (23) entraîné en rotation.

## Patentansprüche

1. Getriebe mit mehreren Sekundärwellen (41, 42) und mehreren Kupplungen (10), die jeder dieser mehreren Sekundärwellen zugeordnet sind, wobei jede Sekundärwelle mehrere Gänge trägt, wobei das Getriebe ebenfalls eine Einheit zur Einrückbetätigung mehrerer Gänge einer Sekundärwelle aufweist, **dadurch gekennzeichnet, dass** die Betätigungseinheit zwei Betätigungselemente (21, 22) aufweist, von denen jedes mindestens einen Gang der gleichen Sekundärwelle einrückt und ausrückt, wobei die Betätigungseinheit außerdem ein mechanisches Verbindungsorgan (29) zwischen den zwei Betätigungselementen aufweist, das ein Betätigungselement in der Gangausrückstellung sichert, wenn das andere der Betätigungselemente zum Gangeinrücken angetrieben wird, **dadurch gekennzeichnet, dass** das mechanische Verbindungsorgan einen Innenumriss aufweist, der mit einer jeweiligen Ausstülpung (21a, 22a) jedes der Betätigungselemente (21, 22) zusammenwirkt, so dass eine Gleitverschiebung des mechanischen Verbindungsorgans eine Rückstellung eines Betätigungselements in die neutrale Stellung beim Gleiten des mechanischen Verbindungsorgans erzeugt, wobei die Antriebseinheit mindestens eine Nocke (26, 28) enthält, die bei einem Antrieb eines Betätigungselements in eine Gangeinrückung angetrieben wird und eine Verschiebung des mechanischen Verbindungsorgans durch Gleiten der Nocke gegen das mechanische Verbindungsorgan einleitet.

2. Getriebe nach dem vorhergehenden Anspruch, **dadurch gekennzeichnet, dass** das mechanische Verbindungsorgan (29) ein gleitendes Organ ist.

3. Getriebe nach Anspruch 1 oder 2, **dadurch gekennzeichnet, dass** es eine jeweilige Nocke aufweist, die jedem Betätigungselement zugeordnet ist, und dass die Antriebseinheit so konfiguriert ist, dass die Nocke (26, 28) vor dem Betätigungselement angetrieben wird, wenn letzteres zum Einrücken eines Gangs verschoben wird.

4. Getriebe nach Anspruch 1, 2 oder 3, **dadurch gekennzeichnet, dass** die Nocke (26, 28) eine Ausstülpung aufweist, die weg von einer Drehachse des Betätigungselements gerichtet ist, und das mechanische Verbindungsorgan einen Umriss aufweist, der eine Gleitschiene für die Ausstülpung der Nocke formt, so dass diese Gleitschiene bei einer Drehung der Nocke weg von der Drehachse des Betätigungselements angetrieben wird.

5. Getriebe nach einem der vorhergehenden Ansprüche, **dadurch gekennzeichnet, dass** die zwei Betätigungselemente (21, 22) drehbare Elemente sind und die gleiche Drehachse aufweisen.

6. Getriebe nach einem der vorhergehenden Ansprüche, **dadurch gekennzeichnet, dass** die Betätigungselemente von dem gleichen Betätigungsfinger (23) betätigt werden, wobei der Betätigungsfinger zwischen zwei Stellungen angetrieben wird, in denen er mit dem einen bzw. dem anderen der zwei Betätigungselemente zusammenwirkt.

7. Getriebe nach einem der vorhergehenden Ansprüche, **dadurch gekennzeichnet, dass** die zwei Betätigungselemente (21, 22) aus Drehhebeln von im Wesentlichen entgegengesetzter Richtung bestehen, und das mechanische Verbindungsorgan ein in die zueinander entgegengesetzten Richtungen des einen und des anderen der zwei Betätigungselemente in Verschiebung gleitendes Organ (29) ist.

8. Getriebe nach einem der vorhergehenden Ansprüche, **dadurch gekennzeichnet, dass** die zwei Betätigungselemente (21, 22) vom gleichen in Drehung versetzten Betätigungsfinger (23) angetrieben werden.

## Claims

1. Gearbox with multiple secondary shafts (41, 42) and multiple clutches (10) which are associated respectively with each of these multiple secondary shafts, each secondary shaft carrying several ratios, the gearbox also comprising an actuating assembly driven to engage several ratios of a secondary shaft, **characterized in that** the actuating assembly has two actuating elements (21, 22) each of which engages and disengages at least one ratio of one same secondary shaft, the actuating assembly further having a mechanical connection member (29) for connection between the two actuating elements and which secures one actuating element in the ratio-disengaged position when the other of the actuating elements is made to engage a ratio, **characterized in that** the mechanical connection member has an internal contour that collaborates with a respective protrusion (21a, 22a) of each of the actuating elements (21, 22) so that causing the mechanical connection member to slide causes one actuating element to be returned to a neutral position upon the sliding of the mechanical connection member, the driving assembly comprising at least one cam (26, 28) which is driven in a drive to engage a ratio of one actuating element, and initiating a movement of the mechanical connection member by sliding of the cam against the mechanical connection member.

2. Gearbox according to the preceding claim, **characterized in that** the mechanical connection member (29) is a sliding member.

3. Gearbox according to Claim 1 or 2, **characterized in that** it comprises a respective cam associated with each actuating element, and **in that** the drive assembly is configured in such a way that the cam (26, 28) is driven before the actuating element when the latter is moved to engage a ratio.

4. Gearbox according to Claim 1, 2 or 3, **characterized in that** the cam (26, 28) has a projection directed away from an axis of rotation of the actuating element and the mechanical connection element has a contour that forms a guideway for the protrusion of the cam so that this guideway is driven away from the axis of rotation of the actuating element when the cam is rotated.

5. Gearbox according to any one of the preceding claims, **characterized in that** the two actuating elements (21, 22) are rotary elements and have the same axis of rotation.

6. Gearbox according to any one of the preceding claims, **characterized in that** the two actuating elements are actuated by one and the same actuating pin (23), the actuating pin being driven between two positions in which it respectively collaborates with one or other of the two actuating elements.

7. Gearbox according to any one of the preceding claims, **characterized in that** the two actuating elements (21, 22) consist of rotary levers of substantially opposite direction and the mechanical connection member is a sliding member (29) able to slide in the opposite directions of each of the two actuating elements.

8. Gearbox according to any one of the preceding claims, **characterized in that** the two actuating elements (21, 22) are driven by one and the same actuating pin (23) driven to rotate.
